# EUROPEAN PATENT SPECIFICATION

(11) **EP 2 845 472 B1**
(45) Date of publication and mention of the grant of the patent: **22.06.2016**
(21) Application number: 14183584.3
(22) Date of filing: 04.09.2014
(51) Int. Cl.: A01K 1/015, A01K 1/02

(54) **Stable module and stable built up from such stable modules**
Modulare Struktur für einen Stall und Stall mit solchen Struckuren
Structure modulaire pour étable et étable avec telles structures

(30) Priority: 04.09.2013 NL 2011379
(43) Date of publication of application: 11.03.2015
(73) Proprietor: Happy Animal Comfort B.V., 3774 RK Kootwijkerbroek (NL)
(72) Inventor: van Beek, Albertus, 3774 RK Kootwijkerbroek (NL)
(74) Representative: V.O.

(56) References cited:
- EP-A1- 0 700 634
- EP-A1- 1 673 972
- DE-A1-102004 028 134
- NL-C2- 1 004 036

## Description

### FIELD

The invention relates to a new type of stable. For instance, a stable for pigs or calves.

### BACKGROUND

Stable systems for, e.g., pigs or calves are known. In practice, stable systems are fabricated on site. Foundations are poured, dung removal channels are arranged, stable floors with dung discharge openings are poured or placed, and walls are poured or placed. Due to the necessity of carrying out many pouring and placement activities at the site where the stable is to be realized, constructing a stable is a costly affair.

EP-1 673 972 A1 describes a stable floor which is built up from prefabricated concrete gangway and cubicle elements which, after placement on a planar surface, can be connected to each other. A gangway is formed by two juxtaposed rows of the gangway elements mentioned. The gangway elements are so designed that the two juxtaposed rows for forming a gangway further form a channel in which a cable for a stable dung cleaning installation can be received.

The stable system to which the present invention relates should not be confused with stable systems where the animals dwell on grids. Such grids are included in a frame with the aid of which the grids are generally positioned about 0.5 to 1 meter above a generally concrete floor. Between the floor on which the frame is set up and the grids, so-called dung trays or manure pans are set up which are also mounted in the frame. Such dung trays are generally manufactured in plastic and are provided with a bottom wall which is arranged at a slight inclination and on which dung and urine land which are produced by the animals and fall through the grids on which the animals dwell. Such a dung tray is for instance described in NL1004036. The dung trays are therefore unsuitable, and neither are they intended, for animals to lie or stand on. An inextricable component of a stable provided with dung trays is a floor on which a frame is set up and grids that rest on the frame and on which the animals dwell. Such a stable is relatively costly because of the necessity of pouring a floor, providing a frame which is placed on the floor, providing grids which are placed on the frame, and providing dung trays which are included in the frame. The frame and the grids need to be of such robust construction as to be able to bear the weight of the animals dwelling on the grids.

### SUMMARY

The object of the invention is to provide a stable system which can be rapidly built up and which can be realized at a relatively low cost price. To this end, the invention provides a stable module comprising:
- a rectangular floor having two opposite longitudinal edges and a front and a rear transverse edge which are located opposite each other;
- at least one dung discharge opening which is provided in the floor;
- at least one dung trough which is arranged under the floor and is associated with the at least one dung discharge opening, wherein the dung trough bounds a dung trough space in which the at least one dung discharge opening terminates, wherein the dung trough comprises:
   ∘ a number of dung trough walls; and
   ∘ a dung drain opening which is provided at an underside of the dung trough space in one of the dung trough walls and to which a dung removal channel is connectable; and
wherein the floor provides a bearing surface on which the at least one animal dwelling in or on the stable module stands and lies, wherein the floor is configured to bear the at least one animal dwelling in or on the stable module, and wherein the floor and the dung trough walls are manufactured from prefab concrete and form a monolithic whole which is self-supporting.

Such a stable module can be manufactured in an inexpensive manner in that it is a monolithic concrete construction which can be cast in one go. Instead of manufacturing the whole stable module in one casting operation, it is also possible to manufacture the stable module by a protruding bar method, whereby, for instance, the dung trough can first be separately cast with reinforcement bar ends still protruding from the concrete, whereby subsequently the floor is poured after placement of the dung trough in a floor mold, such that the still protruding reinforcement ends of the dung trough are embedded in the liquid concrete of the floor. After curing of the concrete of the floor, the dung trough and the floor form a monolithic whole. It will be clear that variants on the example of the above-described protruding bar method are possible. Thus, for instance, also the dung trough walls could be mutually connected by means of the protruding bar method.

Owing to the stable module being self-supporting, it can be transported in its entirety after manufacture. Self-supporting should be understood to mean that the stable module, when it is supported at its longitudinal edges and/or transverse edges and/or the underside of the dung trough, can bear its own weight, the weight of animals present thereon, as well as the weight of any dung and liquid present in the dung trough. After placement of the various stable modules next to each other, a complete stable is realized, whose floor forms a continuous, stable, whole. For placing a row of stable modules, it can suffice to provide a leveled path on which the undersides of the dung troughs can rest and/or the stable module can rest on only a few supporting points, such as one or a few pads or pillars or lengths of walling. Owing to the stable modules being self-supporting, a stable stable-floor can be realized with a particularly simple foundation and hence with minimal means. This in contrast to a stable where the animals dwell on grids that rest on a frame and under which dung trays are set up, since such a frame should in turn be supported by a floor. In such a stable, the stable floor is to bear the entire weight of the frame, the dung trays, the grids, as well as the animals. The floor of a stable intended for a dung tray as described in NL1004036 must therefore be cast on site, whereas in the stable module according to the invention the floor is an integral part of the stable module.

With the present stable module, a floor/living space and a dung reception are provided integrated in one prefab concrete element.

After placement of the stable modules according to the invention, only the dung drain openings need to be connected to a dung removal channel and the basis of a stable is already in place.

In a first embodiment, the stable module may be provided with at least two side walls and a rear wall which extend from the floor in upward direction and which adjoin the two longitudinal edges and the rear transverse edge, respectively, and which together bound an access opening to the space which is bounded by the rear wall and the side walls, while the rear wall and the side walls are manufactured from prefab concrete and form a monolithic whole with the floor and the dung trough walls.

In an alternative, second embodiment, the stable module can be not provided with a rear wall and side walls from prefab concrete which form a monolithic whole with the floor and the dung trough walls.

The invention further provides a stable provided with at least one row of stable modules according to the invention.

In an embodiment of the stable, there may be arranged in the row, juxtaposed in alternation:
- stable modules according to the above-described first embodiment; and
- stable modules according to the above-described second embodiment.

In such an embodiment of the stable, the walls of the stable modules according to the first embodiment also form a boundary for the stable modules according to the second embodiment.

Such a stable can be simply constructed by setting up the prefabricated monolithic concrete stable modules next to each other. Manufacture of the stable modules has taken place in a central production facility. After that, the modules can be conveyed with the aid of a truck to their destination and be simply placed next to each with a crane. What remains to be done is only connecting dung removal channels to the dung drain opening and possibly mounting some loose gates and/or walls. Thus, in a very inexpensive manner, a complete stable can be rapidly provided.

Further elaborations are described in the subclaims and will be further clarified below, with reference to the drawings.

### BRIEF DESCRIPTION OF THE FIGURES

Fig. 1 shows a perspective view of an exemplary embodiment of a stable module having one dung discharge opening in the floor;

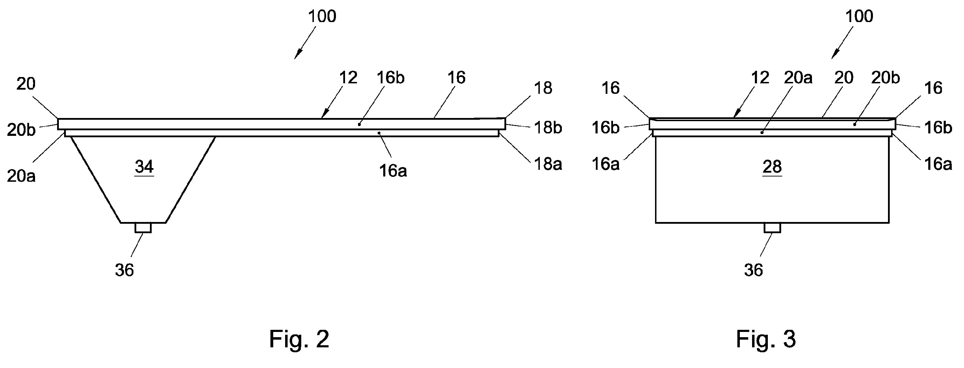

Fig. 2 shows a side view of the exemplary embodiment of Fig. 1;
Fig. 3 shows a front view of the exemplary embodiment of Fig. 1;
Fig. 4 shows a perspective view of an exemplary embodiment of a stable module with two side walls and a rear wall;
Fig. 5 shows a top plan view of the exemplary embodiment of Fig. 4;
Fig. 6 shows a cross-sectional view along line VI-VI of Fig. 5;
Fig. 7 shows a perspective view of a portion of an exemplary embodiment of a stable which is built up from the stable modules of the exemplary embodiment of Figs. 1-3 and stable modules of the exemplary embodiment of Figs. 4-6;
Fig. 8 shows a top plan view of the portion of an exemplary embodiment of the stable shown in Fig. 7;
Fig. 9 shows a cross-sectional view along line IX-IX of Fig. 8;
Fig. 10 shows a cross-sectional view along line X-X of Fig. 8;
Fig. 11 shows a detail of Fig. 9;
Fig. 12 shows a detail of Fig. 10; and
Fig. 13 shows the exemplary embodiment of the stable module of Fig. 4 which is provided with a gate and planks heightening the side walls and rear walls.

### DETAILED DESCRIPTION

Below, mention is made of embodiments. This term indicates more specific, and hence also optional elaborations of the basic invention. These embodiments are applicable independently of each other, but can also be combined with each other. Further, below, mention is made of exemplary embodiments. The exemplary embodiments are the examples that are shown in the figures and accordingly should be interpreted as examples only. An embodiment may be realized in several embodiments. Also, generally, an exemplary embodiment will contain several embodiments of the invention.

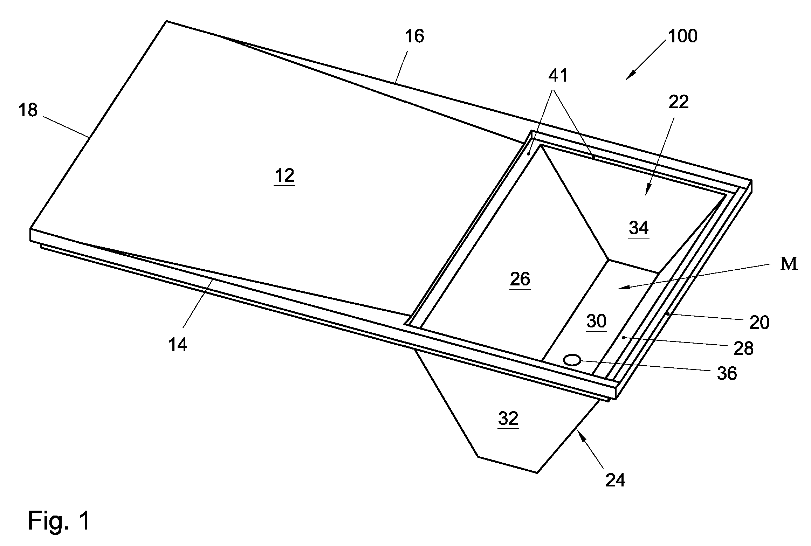

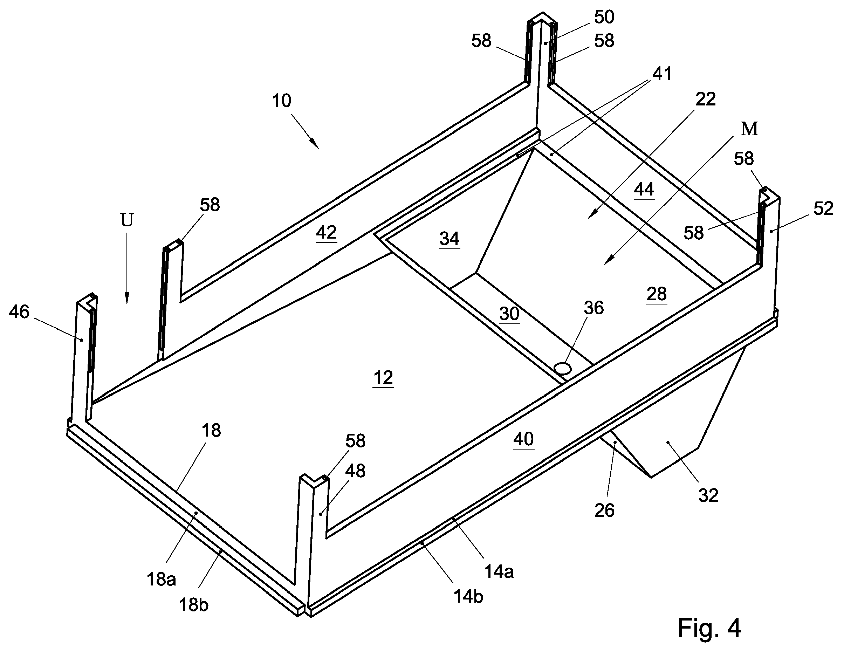

In the most general terms, a stable module 10, 100 is provided which comprises a rectangular floor 12 with two opposite longitudinal edges 14, 16 and a front and a rear transverse edge 18, 20 which are also located opposite each other. Exemplary embodiments of such stable modules are shown in Figs. 1 and 4. Further, the stable module 10, 100 comprises at least one dung discharge opening 22 which is provided in the floor 12. In the exemplary embodiments shown in the figures, the floor in each case is provided with just one dung discharge opening 22, more specifically near the rear transverse edge 20 of the floor. However, it is within the purview of the invention that the floor 12 is provided with more than one dung discharge opening 22. For instance, one near the front transverse edge 18 and one near the rear transverse edge 20. Possibly, a dung discharge opening may also be provided along one or both of the longitudinal edges 14, 16. Further, the stable module 10, 100 is provided with at least one dung trough 24 which is arranged under the floor 12 and which is associated with the at least one dung discharge opening 22, the dung trough 24 bounding a dung trough space M in which the at least one dung discharge opening 22 terminates. When the stable module 10, 100 is provided with more than one dung discharge opening 22, then, generally, there will also be more than one dung trough 24. However, this is not requisite, for it is also possible that more than one dung discharge opening 22 terminates in a single dung trough 24. The dung trough 24 is generally provided with a number of dung trough walls 26-34 and with a dung drain opening 36 which is provided at an underside of the dung trough space M in one of the dung trough walls 26-34. In the exemplary embodiment shown in the figures, the dung drain opening 36 is arranged in a dung trough bottom wall 30 of the dung trough 24. In alternative embodiments, the dung drain opening 36 may also be provided in one of the other walls 26-34 of the dung trough 24, as long as the dung drain opening 36 terminates at the bottom of the dung trough 24. To the dung drain opening 36, a dung removal channel (not shown) is connectable. The floor 12 provides a bearing surface on which stands or lies the at least one animal dwelling in or on the stable module. The floor 12 is configured to bear the at least one animal dwelling in or on the stable module. The floor 12 and the dung trough walls 26-34 are manufactured from prefab concrete and form a monolithic whole. Thus, a stable module 10, 100 is obtained which is self-supporting. This means that the stable module 10, 100 can be manufactured in a concrete factory and that on the site where the stable is to be realized, no concrete casting, at least, concrete casting on a very limited scale, needs to be carried out, at the most, perhaps, for providing a foundation that needs to comprise only a few foundation points. That is of particular importance from the viewpoint of building efficiency and hence costs. Self-supporting is understood to mean that the stable module 10, 100, when it is supported at its longitudinal edges 14, 16 and/or transverse edges 18, 20 and/or the dung trough bottom wall 30, can bear its own weight, the weight of animals present thereon, and the weight of any dung and liquid present in the dung trough 24. In an embodiment where the dung drain opening 36 is in one of the walls 26, 28, 32, 34 other than the bottom wall 30 of the dung trough 24, the stable module 10, 100 can also, at least in part, be supported on the dung trough bottom wall 30, since the dung removal conduits that are to be connected to the dung drain openings 36 can then extend next to the dung troughs 24.

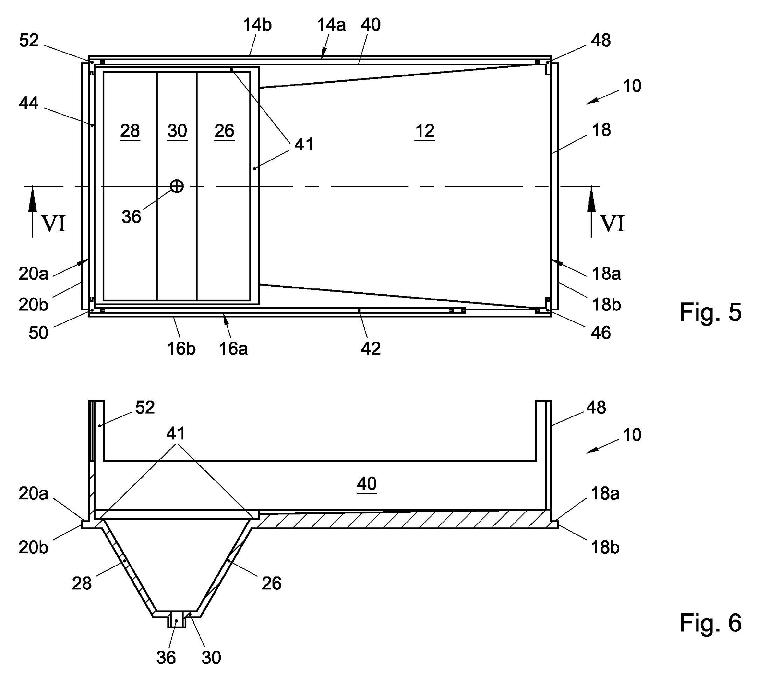

The top of the floor 12 may be of inclined or convex configuration, so that the dung being deposited thereon is easily removed to a dung discharge opening 22. The figures show a sloping top, which is well visible in the cross-sectional view of Fig. 6. Optionally, in the floor 12, piping may be cast-in which can be connected to a heating system, so that the floor 12 may be provided with floor heating. Such conduits may be designed as a water conduit to which a conduit which is in communication with a boiler is connected. The conduits, however, can also be electrical wires which, when connected to an electrical source, heat up as a result of the electrical resistance prevailing therein and thus generate the heat for heating the floor 12.

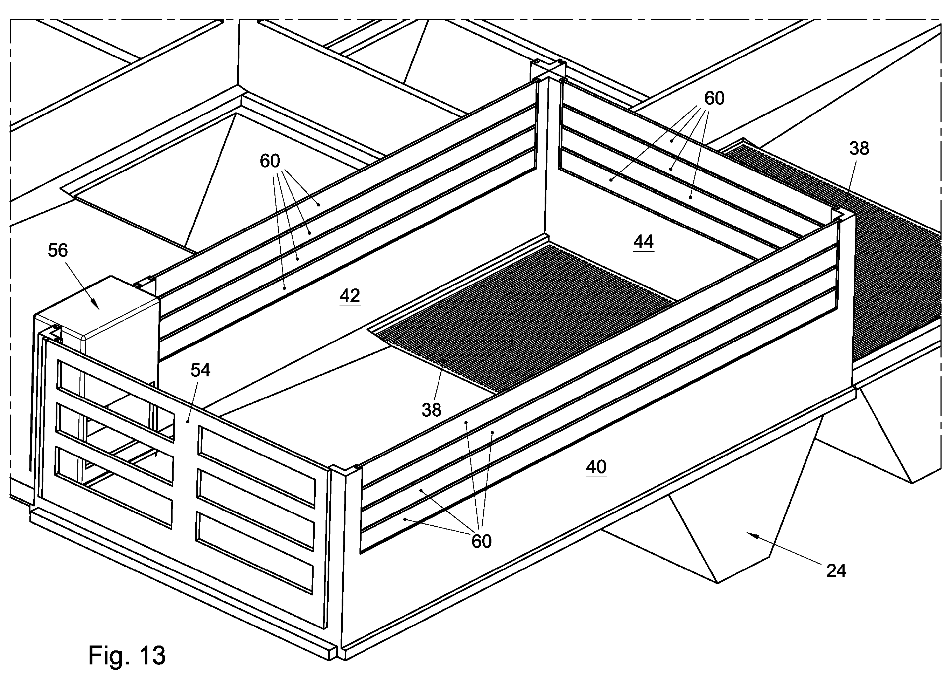

In an embodiment, of which an example is shown in Fig. 13, the stable module 10, 100 is provided with a dung grid 38 which covers the dung discharge opening 22 and which is so configured that an animal can stand on it and that dung can be discharged through it.

In an embodiment, at least a part of the dung grid 38 may be an integral part of the floor 12. This can be realized, for instance, by a plurality of through-openings which are provided in the floor 12 and which terminate in the dung trough space M. The through openings, which may for instance be designed as slots, may be integrally molded during the casting process of the monolithically formed stable module 10, 100.

In an embodiment, the dung grid 38 can be a loose element, while the edges of the dung discharge opening 22 are provided with a groove 41 in which the grid 38 is placeable. Such a dung grid 38, of which an example is shown in Fig. 13, may be manufactured, for instance, from wood, plastic, concrete or metal. It is also possible that a combination is used of a dung grid which is an integral part of the floor 12 and a loose dung grid 38.

In an embodiment, of which an example is shown in Figs. 1 and 4, each dung trough 24 can comprise two obliquely oriented dung trough walls 26, 28 which extend from an underside of the floor 12 in downward direction, viewed from the dung discharge opening 22, being directed obliquely towards each other and joining each other directly, or via an optional dung trough bottom wall 30, at an underside. Further, the dung trough 24 can comprise two opposite dung trough end walls 32, 34 which adjoin the obliquely oriented dung trough walls 26, 28 and the floor 12. The obliquely oriented dung trough walls 26, 28 and the dung trough end walls 32, 34 and the optional dung trough bottom wall 30 can jointly bound the dung trough space M. The dung discharge opening 22 terminates in the dung trough space M. When the dung level in the dung trough space M is kept low, there is a relatively small evaporative surface, which keeps the ammonia content in the stable low. This is of importance to the well-being and health of the animals. In alternative embodiments, the dung trough can also have other configurations. Instead of the trapezium-shaped cross section which is used in the exemplary embodiments shown in the figures, a dung trough may be considered that has a rectangular cross section, or a cross section with two vertical wall parts which are connected to each other through a bottom segment having a circular segment-shaped configuration. Further, also a trapezium-shaped cross section could be considered where the long side of the trapezium is at the bottom and the short side of the trapezium is formed by the dung discharge opening 22 in the floor 12.

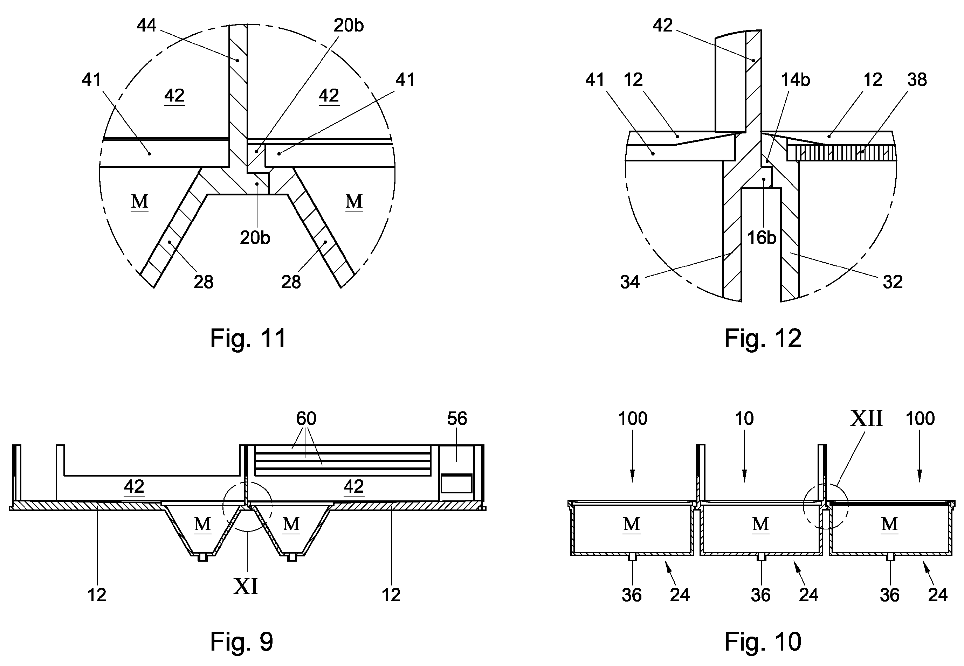

In an embodiment, the longitudinal edges and/or the transverse edges may be provided with grooves 14a, 16a, 18a, 20a, such that the longitudinal edges and/or the transverse edges also comprise a tongue 14b, 16b, 18b, 20b. The exemplary embodiments shown in the figures are provided with such grooves 14a, 16a, 18a, 20a and tongues 14b, 16b, 18b, 20b. The grooves 14a, 16a, 18a, 20a and tongues 14b, 16b, 18b, 20b in such embodiments are so configured that in forming a stable that comprises a plurality of stable modules, the tongue 14b, 16b, 18b, 20b of the longitudinal or transverse edge 14-20 of a stable module 10 is received in the groove 14a, 16a, 18a, 20a of a neighboring stable module 100. This is clearly visible in Figs. 11 and 12, which are details adjacent the junction between two neighboring stable modules 10, 100. By placing the stable modules 10, 100 next to each other, in a fast manner a stable and continuous stable floor is created.

In an embodiment, of which an example is shown in Fig. 4, the stable module 10 can comprise at least two side walls 40, 42 and a rear wall 44 which extend from the floor 12 in upward direction and which extend along the two longitudinal edges 14, 16 and the rear transverse edge 20 and which together bound an access opening to the space that is bounded by the rear wall 44 and the side walls 40, 42. In such an embodiment, the rear wall 44 and the side walls 40, 42 are at least partly made from prefab concrete and they form a monolithic whole with the floor 12 and the dung trough walls 26-34.

In an embodiment, of which an example is shown in Fig. 4, at least one of the side walls 42 may be provided with a recess U in which a dry feed trough, drinking trough and/or wet feed trough 56 is mountable. Fig. 13 shows such a dry feed trough or wet feed trough 56 which is mounted in the recess.

In an embodiment, of which an example is shown in Fig. 4, the stable module 10 may be provided with at least four uprights 46-52, which extend vertically upwards from the corners of the upper wall and which are manufactured from prefab concrete and form a monolithic whole with the floor 12 and the dung trough walls 26-34. The uprights can extend to a higher level above the floor than the side walls 40, 42 and the rear wall 44. Further, in the uprights, slots 58 extending in vertical direction may be provided. In these slots 58, loose plates, tubes or planks 60 may be slidably receivable. With such plates or planks 60, of which an example is shown in Fig. 13, the side walls 40, 42 and the rear wall 44 can be heightened to a desired level.

In an embodiment, the stable module 10, 100 may further be provided with a gate 54 which is configured to close the access opening in a closed position and to clear it in an open position. Fig. 13 shows an example of such a gate 54 which, via a hinge, is pivotably connected to an upright 46 of the stable module 10. The stable modules 100 which are not provided with monolithically co-formed side and rear walls and uprights, may, when they are set up next to stable modules 10 which do comprise such side and rear walls and uprights 46-52, also be provided with a gate 54 which is then mounted to an upright 48 of one of those neighboring stable modules 10.

In an embodiment, of which an example is shown in Fig. 1, the stable module 100 may specifically be not provided with a rear wall 44 and side walls 40, 42. In combination with stable modules 10 which are provided with side walls 40, 42 and a rear wall, it is possible, by juxtaposing stable modules 10, 100 in a suitable manner, to form a stable efficiently, whereby each individual floor 12 is yet bounded by side walls 40, 42 and a rear wall 44, namely, either by its own side walls 40, 42 and rear wall 44, or by side walls 40, 42 and a rear wall of various neighboring stable modules 10.

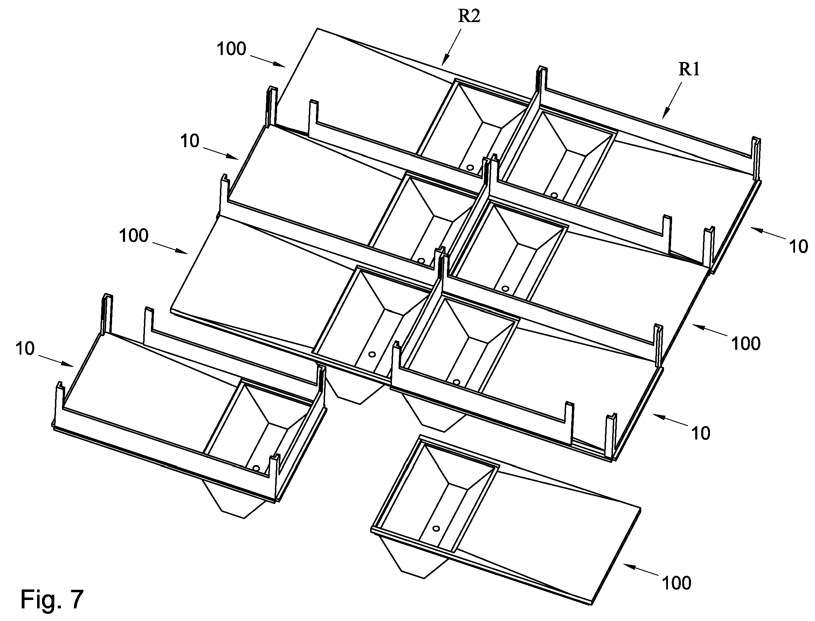

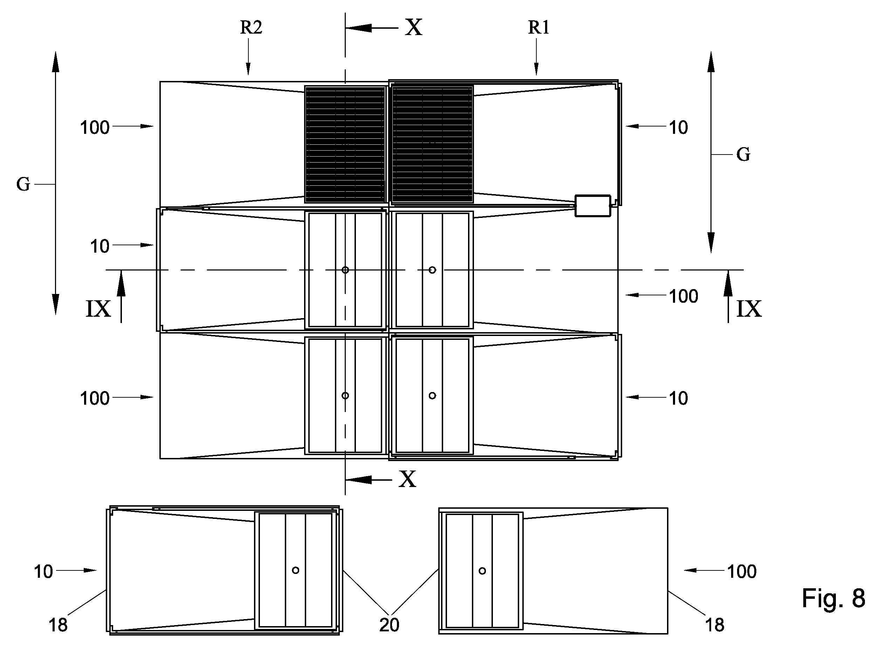

The invention hence also provides a stable which is provided with at least one row R1, R2 of modules 10, 100 according to the invention. An exemplary embodiment of a portion of such a stable is shown in Figs. 7-13.

In an embodiment, in a row R1, R2, there may be arranged next to each other, in alternation, stable modules 100 without side and rear walls 40-44 and stable modules 10 with side and rear walls 40-44.

As a result of such an alternating arrangement of stable modules 10 with side and rear walls 40-44 and stable modules 100 without side and rear walls 40-42, a stable is obtained whereby each stable space which is defined by a stable module 10, 100 is bounded by side walls and a rear wall. This is realized with a minimum amount of weight in concrete in that, in a suitable arrangement, two side walls 40, 42 or rear walls 44 never need to be placed directly against each other.

It is also possible, however, that a large number of stable modules 100 without side walls are placed against each other for forming a large stable surface over which the animals can freely range. The circumferential edges of the large stable surface could be bounded by stable modules that have one or, when a stable module is involved that forms a corner of the stable surface, two walls. In a first variant, these walls could be manufactured from concrete and form a monolithic whole with the relevant stable module. It is also possible, however, that the walls are formed by loose wall elements which are mounted to the floor 12 of the relevant stable module 100. At least some of these stable modules 100 will be provided with a dung trough 24. Other parts of the stable floor to be formed can consist of simple concrete slabs which are not provided with walls nor with a dung trough 24. For such an implementation of a stable, whereby, accordingly, the most part of the stable modules 100 used are not provided with walls and only the stable modules that are at the outer perimeter of the stable floor are provided with walls, a number of the stable modules may be provided with a dung discharge opening 22 and dung grid 38 whose dimensions substantially correspond to the dimensions of the relevant stable module. In the stable floor consisting of multiple stable modules, a number of such stable modules 100 may be juxtaposed with large dung discharge opening 22 next to each other, so that in the stable floor a particular continuous range, comprising more than one stable module, forms a dung discharge range.

Optionally, the stable can comprise a number of loose walls which are intended for closing the sides of the stable modules 100 which are not provided with side and rear walls. Such loose walls can be mounted to the side walls 40, 42 or uprights 50, 52 of the neighboring stable modules according to any one of claims 7-10. It is also possible that the loose walls are mounted on the floor 12 of the relevant stable module 100 itself.

Further, the stable may be provided with a number of loose gates 54 intended for closing the front sides of the stable modules 100 without side walls 40, 42 and rear wall 44. Each loose gate 54 can then be mounted to a side wall 40, 42 or upright 50, 52 of a neighboring stable module 10 according to any one of claims 7-10. Optionally, the gates can also be mounted on the floor 12 of the relevant stable module 100 itself, for instance by means of a loose upright with which the gate 54 is hingedly connected, which upright is provided with a base which can be anchored to the floor 12 through bolts or like fasteners.

In an embodiment, the stable may be provided with at least two rows R1, R2, with each row R1, R2 having a front and a rear, with
the front edges 18 of the floors 12 of the stable modules 10; 100 defining the front, and the rear edges 20 of the floors 12 defining the rear of the row R1, R2. Along the front of a row, preferably, a gangway G extends. Optionally, the gangway G may be provided with grids and under these grids an exhaust installation or an air supply installation may be set up for respectively discharging polluted air from and supplying fresh air into the stable.

In an exemplary embodiment, the fronts of two neighboring rows R1, R2 may face each other, with the gangway G extending between the two mutually facing fronts. Of such an arrangement, no figure is shown, but it will be clear to the average skilled person what is meant.

When a large number of animals are to be housed in a single building, several pairs of rows may be formed, with the rears of two neighboring rows R1, R3 facing each other and placed against each other without interspaces. Such an arrangement is shown in Figs. 7-10 and 13. It is noted that in those figures two stable modules 10, 100 have not yet been placed against the other stable modules 10, 100 to make clear how the alternating placement of the stable modules 10, 100 efficiently leads to formation of stable spaces which are each screened off by side and rear walls 40-44 while only half of the stable modules 10 are provided with such side and rear walls 40-44.

The stable modules 10, 100 shown in the exemplary embodiments preferably have a maximum width of 2.6 m, so that they can still be transported by truck. The length of the floor 12 can be, for instance, 4.6 m. The height of the side and rear walls forming a monolithic whole with the floor 12 can be, for instance, 0.6 m, and the height of the uprights 45-52, integrally cast in concrete, can be, for instance, 1.1 m. Preferably, the width of the dung trough 24 is less than the distance between two side walls 40, 42. Thus, a stable module 100 without side and rear walls 40-42 and a stable module 10 with side and rear walls can be placed onto each other with the undersides facing each other, so that the two modules together have a height of about 0.8 m when they are not provided with uprights, and about 1.4 m when they do comprise uprights 46-52. On a truck, three to five of such pairs of stable modules 10, 100 can be conveyed, so that per truck 6 to 10 stable modules 10, 100 can be conveyed.

With the stable modules 10, 100, also stables can be built that comprise multiple tiers. The monolithic concrete construction of a stable module 10, 100 is self-supporting, that is, the stable module 10, 100, when it is supported at its longitudinal edges 14, 16 and/or transverse edges 18, 20 and/or underside of the dung trough, can bear its own weight, the weight of animals present thereon, as well as the weight of any dung and liquid present in the dung trough 24. In such a stable, also yet other stable modules may be incorporated. Such other stable modules may for instance comprise a floor but not be provided with integrally molded dung troughs 24. Such other stable modules possibly do comprise dung removal openings which can then terminate in a dung removal channel to be separately laid. Such other stable modules may or may not be provided with side and/or rear walls which are co-formed with the floor.

Possibly, the feeding trough, drinking trough and/or wet feed trough 56 may be integrally formed in the stable module 10, 100 and therefore be part of the monolithic concrete construction which also comprises the floor 12, the dung trough walls 26-34 and any side and rear walls 40-42.

Although the invention has been represented and described in detail with reference to the drawing, this drawing and the description are to be regarded as an example only. The invention is not limited to the embodiments described. Features that are described in dependent claims can be combined with each other. Reference numerals in the claims and the foregoing detailed description should not be construed as limitations of the claims but are for clarification only.

## Claims

1. A stable module (10; 100) comprising:
• a rectangular floor (12) having two opposite longitudinal edges (14, 16) and a front and a rear transverse edge (18, 20) which are located opposite each other;
• at least one dung discharge opening (22) which is provided in the floor (12);
• at least one dung trough (24) which is arranged under the floor (12) and is associated with the at least one dung discharge opening (22), wherein the dung trough (24) bounds a dung trough space (M) in which the at least one dung discharge opening (22) terminates, wherein the dung trough (24) comprises:
∘ a number of dung trough walls (26-34); and
∘ a dung drain opening (36) which is provided at an underside of the dung trough space (M) in one of the dung trough walls (26-34) and to which a dung removal channel is connectable;
**characterized in that** the floor (12) provides a bearing surface on which the at least one animal dwelling in or on the stable module stands and lies, wherein the floor (12) is configured to bear the at least one animal dwelling in or on the stable module, and wherein the floor (12) and the dung trough walls (26-34) are manufactured from prefab concrete and form a monolithic whole which is self-supporting.

2. The stable module according to claim 1, provided with:
• a dung grid (38) which covers the dung discharge opening (22) and is so configured that on it an animal can stand and that through it dung can be discharged.

3. The stable module according to claim 2, wherein at least a part of the dung grid (38) is an integral part of the floor (12) and comprises a plurality of through openings in the floor (12) which terminate in the dung trough space (M).

4. The stable module according to claim 2, wherein the dung grid (38) is a loose element, while the edges of the dung discharge opening (22) are provided with a groove (41) in which the grid (38) is placeable.

5. The stable module according to any one of claims 1-4, wherein each dung trough comprises:
∘ two obliquely oriented dung trough walls (26, 28) which extend from an underside of the floor (12) in downward direction, viewed from the dung discharge opening (22), directed towards each other, and at an underside adjoin each other directly, or via an optional dung trough bottom wall (30); and
∘ two opposite dung trough end walls (32, 34) which adjoin the obliquely oriented dung trough walls (26, 28) and the floor (12), wherein the obliquely oriented dung trough walls (26, 28) and the dung trough end walls (32, 34) and the optional dung trough bottom wall (30) together bound the dung trough space (M), while the dung discharge opening (22) terminates in the dung trough space (M).

6. The stable module according to any one of claims 1-5, wherein the longitudinal edges and/or the transverse edges are provided with grooves (14a, 16a, 18a, 20a), such that the longitudinal edges and/or the transverse edges also comprise a tongue (14b, 16b, 18b, 20b), and so configured that in forming a stable which comprises a plurality of stable modules, the tongue (14b, 16b, 18b, 20b) of the longitudinal or transverse edge of a stable module is received in the groove (14a, 16a, 18a, 20a) of a neighboring stable module.

7. The stable module (10) according to any one of claims 1-6, comprising:
• at least two side walls (40, 42) and a rear wall (44) which extend from the floor (12) in upward direction and which extend along the two longitudinal edges (14, 16) and the rear transverse edge (20), respectively, and which together bound an access opening to the space which is bounded by the rear wall (44) and the side walls (40, 42), wherein the rear wall (44) and the side walls (40, 42) are manufactured from prefab concrete and form a monolithic whole with the floor (12) and the dung trough walls (26-34).

8. The stable module according to claim 7, wherein one of the side walls (42) is provided with a recess (U) in which a dry feed trough, drinking trough and/or wet feed trough (56) is mountable.

9. The stable module according to any one of claims 7-8, comprising:
• at least four uprights (46-52), which extend vertically upwards from the corner points of the upper wall and which are manufactured from prefab concrete and form a monolithic whole with the floor (12) and the dung trough walls (26-34), wherein the uprights can extend to a higher level above the floor than the side walls (40, 42) and the rear wall (44), wherein in the uprights (46-52) slots (58) extending in vertical direction are provided, in which loose plates, tubes or planks (60) are slidably receivable.

10. The stable module according to any one of claims 7-9, provided with:
• a gate (54) which is configured to close the access opening in a closed position and to clear it in an open position.

11. The stable module (100) according to any one of claims 1-6, wherein the stable module (100) is not provided with a rear wall (44) and side walls (40, 42).

12. A stable provided with at least one row of stable modules (10, 100) according to any one of claims 1-11.

13. The stable according to claim 12, wherein in the row there are arranged next to each other, in alternation:
• stable modules according to claim 11; and
• stable modules according to any one of claims 7-10.

14. The stable according to claim 12 or 13, provided with:
• a number of loose walls intended for closing at least one particular desired side of at least one of the stable modules (100) according to claim 11, wherein each loose wall is mounted to the floor (12) of the relevant stable module (100) or to the side walls (40, 42) or uprights (50, 52) of the neighboring stable modules (10) according to any one of claims 7-10.

15. The stable according to any one of claims 12-14, provided with:
• a number of loose gates (54) intended for closing a desired side of at least one of the stable modules (100) according to claim 11, wherein each loose gate (54) is mounted to the floor (12) of the relevant stable module (100) or to a side wall (40, 42) or upright (46, 48) of a neighboring stable module (10) according to any one of claims 7-10.

16. The stable according to any one of claims 12-15, provided with at least two rows (R1, R2), with each row (R1, R2) having a front and a rear, with the front edges (18) of the floors (12) of the stable modules (10; 100) defining the front, and the rear edges (20) of the floors (12) defining the rear of the row (R1, R2), wherein along the front of a row, a gangway (G) extends.

17. The stable according to claim 16, wherein the fronts of two neighboring rows (R1, R2) face each other, wherein between the two mutually facing fronts, the gangway (G) extends.

18. The stable according to claim 16 or 17, wherein the rear sides of two neighboring rows (R1, R3) face each other and are placed against each other without interspaces.

## Patentansprüche

1. Modulare Struktur (10; 100) für einen Stall, umfassend:
• einen rechteckigen Boden (12) mit zwei gegenüberliegenden Längskanten (14, 16) und einer vorderen und einer hinteren Querkante (18, 20), die entgegengesetzt zueinander angeordnet sind;
• mindestens eine Dungabfuhröffnung (22), die in dem Boden (12) bereitgestellt ist;
• mindestens eine Dungwanne (24), die unter dem Boden (12) angeordnet ist und mit der mindestens einen Dungabfuhröffnung (22) verbunden ist, wobei die Dungwanne (24) einen Dungwannenraum (M) begrenzt, in dem die mindestens eine Dungabfuhröffnung (22) endet,
wobei die Dungwanne (24) Folgendes umfasst:
- eine Anzahl von Dungwannenwänden (26-34); und
- eine Dungablassöffnung (36), die an einer Unterseite des
Dungwannenraums (M) in einer der Dungwannenwände (26-34) bereitgestellt ist und an die ein Dungentfernungskanal angeschlossen werden kann;
**dadurch gekennzeichnet,**
**dass** der Boden (12) eine Tragfläche bereitstellt, auf der das mindestens eine Tier, das sich in oder auf der modularen Struktur aufhält, steht und liegt, wobei der Boden (12) konfiguriert ist, um das mindestens eine Tier, das sich in oder auf der modularen Struktur aufhält, zu tragen, und wobei der Boden (12) und die Dungwannenwände (26-34) aus Fertigbeton hergestellt sind und ein monolithisches Ganzes bilden, das selbsttragend ist.

2. Modulare Struktur nach Anspruch 1, versehen mit:
• einem Dunggitter (38), das die Dungabfuhröffnung (22) abdeckt und so konfiguriert ist, dass ein Tier darauf stehen kann und dass durch sie der Dung abgeführt werden kann.

3. Modulare Struktur nach Anspruch 2, wobei mindestens ein Teil des Dunggitters (38) ein integraler Teil des Bodens (12) ist und mehrere Durchgangsöffnungen in dem Boden (12) umfasst, die in dem Dungwannenraum (M) enden.

4. Modulare Struktur nach Anspruch 2, wobei das Dunggitter (38) ein loses Element ist, während die Kanten der Dungabfuhröffnung (22) mit einer Rille (41) versehen sind, in die das Gitter (38) platziert werden kann.

5. Modulare Struktur nach einem der Ansprüche 1-4, wobei jede Dungwanne Folgendes umfasst:
∘ zwei schräg ausgerichtete Dungwannenwände (26, 28), die von einer Unterseite des Bodens (12) in Abwärtsrichtung, gesehen von der Dungabfuhröffnung (22), zueinander gerichtet verlaufen und an der Unterseite direkt oder über eine optionale Dungwannen-Bodenwand (30) aneinander anstoßen; und
∘ zwei gegenüberliegende Dungwannen-Endwände (32, 34), die an die schräg ausgerichteten Dungwannenwände (26, 28) und den Boden (12) anstoßen, wobei die schräg ausgerichteten Dungwannenwände (26, 28) und die Dungwannen-Endwände (32, 34) und die optionale Dungwannen-Bodenwand (30) zusammen den Dungwannenraum (M) begrenzen, während die Dungabfuhröffnung (22) in dem Dungwannenraum (M) endet.

6. Modulare Struktur nach einem der Ansprüche 1-5, wobei die Längskanten und/oder die Querkanten mit Rillen (14a, 16a, 18a, 20a) versehen sind, sodass die Längskanten und/oder die Querkanten auch eine Zunge (14b, 16b, 18b, 20b) umfassen und so konfiguriert sind, dass beim Bilden eines Stalls, der mehrere modulare Strukturen umfasst, die Zunge (14b, 16b, 18b, 20b) der Längs- oder Querkante einer modularen Struktur in die Rille (14a, 16a, 18a, 20a) einer benachbarten modularen Struktur aufgenommen wird.

7. Modulare Struktur (10) nach einem der Ansprüche 1-6, umfassend:
• mindestens zwei Seitenwände (40, 42) und eine Hinterwand (44), die vom Boden (12) in Aufwärtsrichtung verlaufen und die entlang der zwei Längskanten (14, 16) bzw. der hinteren Querkante (20) verlaufen, und die zusammen eine Zugangsöffnung zu dem Raum bilden, der von der Hinterwand (44) und den Seitenwänden (40, 42) begrenzt wird, wobei die Hinterwand (44) und die Seitenwände (40, 42) aus Fertigbeton hergestellt sind und ein monolithisches Ganzes mit dem Boden (12) und den Dungwannenwänden (26-34) bilden.

8. Modulare Struktur nach Anspruch 7, wobei eine der Seitenwände (42) mit einer Vertiefung (U) versehen ist, in der eine Trockenfutterwanne, eine Trinkwanne und/oder eine Nassfutterwanne (56) angebracht werden kann.

9. Modulare Struktur nach einem der Ansprüche 7-8, umfassend:
• mindestens vier Stehprofile (46-52), die von den Eckpunkten der oberen Wand vertikal nach oben verlaufen und die aus Fertigbeton hergestellt sind und ein monolithisches Ganzes mit dem Boden (12) und den Dungwannenwänden (26-34) bilden, wobei die Stehprofile bis zu einem höheren Niveau über dem Boden als die Seitenwände (40, 42) und die Hinterwand (44) verlaufen können, wobei in den Stehprofilen (46-52) Schlitze (58), die in vertikaler Richtung verlaufen, bereitgestellt sind, in denen lose Platten, Rohre oder Planken (60) verschiebbar aufgenommen werden können.

10. Modulare Struktur nach einem der Ansprüche 7-9, versehen mit:
• einem Tor (54), das konfiguriert ist, um die Zugangsöffnung in einer geschlossenen Position zu schließen und in einer offenen Position freizugeben.

11. Modulare Struktur (100) nach einem der Ansprüche 1-6, wobei die modulare Struktur (100) nicht mit einer Hinterwand (44) und Seitenwänden (40, 42) versehen ist.

12. Stall, versehen mit mindestens einer Reihe modularer Strukturen (10, 100) nach einem der Ansprüche 1-11.

13. Stall nach Anspruch 12, wobei in der Reihe abwechselnd nebeneinander angeordnet sind:
• modulare Strukturen nach Anspruch 11; und
• modulare Strukturen nach einem der Ansprüche 7-10.

14. Stall nach Anspruch 12 oder 13, versehen mit:
• einer Anzahl von losen Wänden, vorgesehen zum Schließen von mindestens einer bestimmten gewünschten Seite von mindestens einer der modularen Strukturen (100) nach Anspruch 11, wobei jede lose Wand am Boden (12) der entsprechenden modularen Struktur (100) oder an den Seitenwänden (40, 42) oder den Stehprofilen (50, 52) der benachbarten modularen Strukturen (10) nach einem der Ansprüche 7-10 montiert ist.

15. Stall nach einem der Ansprüche 12-14, versehen mit:
• einer Anzahl von losen Toren (54), vorgesehen zum Schließen von mindestens einer gewünschten Seite von mindestens einer der modularen Strukturen (100) nach Anspruch 11, wobei jedes lose Tor (54) am Boden (12) der entsprechenden modularen Struktur (100) oder an einer Seitenwand (40, 42) oder einem Stehprofil (46, 48) einer benachbarten modularen Struktur (10) nach einem der Ansprüche 7-10 montiert ist.

16. Stall nach einem der Ansprüche 12-15, versehen mit mindestens zwei Reihen (R1, R2), wobei jede Reihe (R1, R2) eine Vorderseite und eine Hinterseite hat, wobei die Vorderkanten (18) der Böden (12) der modularen Strukturen (10; 100) die Vorderseite, und die Hinterkanten (20) der Böden (12) die Hinterseite der Reihe (R1, R2) definieren, wobei entlang der Vorderseite einer Reihe ein Gang (G) verläuft.

17. Stall nach Anspruch 16, wobei die Vorderseiten von zwei benachbarten Reihen (R1, R2) einander gegenüberliegen, wobei zwischen den zwei einander gegenüberliegenden Vorderseiten der Gang (G) verläuft.

18. Stall nach Anspruch 16 oder 17, wobei die Hinterseiten von zwei benachbarten Reihen (R1, R3) einander gegenüberliegen und ohne Zwischenräume gegeneinander platziert sind.

## Revendications

1. Module d'étable (10 ; 100) comprenant :
• un plancher rectangulaire (12) ayant deux bords longitudinaux opposés (14, 16) et un bord transversal avant et un bord transversal arrière (18, 20) qui sont positionnés à l'opposé l'un de l'autre ;
• au moins une ouverture de décharge de bouse (22) qui est prévue dans le plancher (12) ;
• au moins une goulotte de bouse (24) qui est agencée sous le plancher (12) et est associée avec la au moins une ouverture de décharge de bouse (22), dans lequel la goulotte de bouse (24) délimite un espace de goulotte de bouse (M) dans lequel la au moins une ouverture de décharge de bouse (22) débouche,
dans laquelle la goulotte de bouse (24) comprend :
o un certain nombre de parois de goulotte de bouse (26-34) ; et
o une ouverture d'évacuation de bouse (36) qui est prévue au niveau d'une face inférieure de l'espace de goulotte de bouse (M) dans l'une des parois de goulotte de bouse (26-34) et auquel un canal de retrait de bouse peut être raccordé ;
**caractérisé en ce que** le plancher (12) comprend une surface d'appui sur laquelle le au moins un animal séjournant dans ou sur le module d'étable se tient droit et se couche, dans lequel le plancher (12) est configuré pour supporter le au moins un animal séjournant dans ou sur le module d'étable, et dans lequel le plancher (12) et les parois de goulotte de bouse (26-34) sont fabriqués à partir de béton préfabriqué et forment un ensemble monolithique qui est autoporteur.

2. Module d'étable selon la revendication 1, prévu avec :
• une grille de bouse (38) qui recouvre l'ouverture de décharge de bouse (22) et est configurée de sorte que un animal peut se tenir debout sur cette dernière et à travers laquelle la bouse peut être déchargée.

3. Module d'étable selon la revendication 2, dans lequel au moins une partie de la grille de bouse (38) est une partie intégrante du plancher (12) et comprend une pluralité d'ouvertures débouchantes dans le plancher (12) qui débouchent dans l'espace de goulotte de bouse (M).

4. Module d'étable selon la revendication 2, dans lequel la grille de bouse (38) est un élément libre, alors que les bords de l'ouverture de décharge de bouse (22) sont prévus avec une rainure (41) dans laquelle la grille (38) peut être placée.

5. Module d'étable selon l'une quelconque des revendications 1 à 4, dans lequel chaque goulotte de bouse comprend :
o deux parois de goulotte de bouse (26, 28) orientées de manière oblique, qui s'étendent à partir d'une face inférieure du plancher (12) dans la direction descendante, observées à partir de l'ouverture de décharge de bouse (22), dirigées l'une vers l'autre, et au niveau d'une face inférieure, sont directement attenantes, ou via une paroi inférieure de goulotte de bouse (30) facultative ; et
o deux parois d'extrémité de goulotte de bouse opposées (32, 34) qui sont attenantes aux parois de goulotte de bouse (26, 28) orientées de manière oblique et au plancher (12), dans lequel les parois de goulotte de bouse (26, 28) orientées de manière oblique et les parois d'extrémité de goulotte de bouse (32, 34) et la paroi inférieure de goulotte de bouse facultative (30) délimitent ensemble l'espace de goulotte de bouse (M), alors que l'ouverture de décharge de bouse (22) débouche dans l'espace de goulotte de bouse (M).

6. Module d'étable selon l'une quelconque des revendications 1 à 5, dans lequel les bords longitudinaux et/ou les bords transversaux sont prévus avec des rainures (14a, 16a, 18a, 20a) de sorte que les bords longitudinaux et/ou les bords transversaux comprennent également une languette (14b, 16b, 18b, 20b) et configurés de sorte que pour former une étable qui comprend une pluralité de modules d'étable, la languette (14b, 16b, 18b, 20b) du bord longitudinal ou transversal d'un module d'étable est reçue dans la rainure (14a, 16a, 18a, 20a) d'un module d'étable voisin.

7. Module d'étable (10) selon l'une quelconque des revendications 1 à 6, comprenant :
• au moins deux parois latérales (40, 42) et une paroi arrière (44) qui s'étendent à partir du plancher (12) dans la direction ascendante et qui s'étendent le long des deux bords longitudinaux (14, 16) et du bord transversal arrière (20), respectivement, et qui délimitent ensemble une ouverture d'accès à l'espace qui est délimité par la paroi arrière (44) et les parois latérales (40, 42), dans lequel la paroi arrière (44) et les parois latérales (40, 42) sont fabriquées à partir de béton préfabriqué et forment un ensemble monolithique avec le plancher (12) et les parois de goulotte de bouse (26-34).

8. Module d'étable selon la revendication 7, dans lequel l'une des parois latérales (42) est prévue avec un évidemment (U) dans lequel une mangeoire pour alimentation sèche, un abreuvoir et/ou une mangeoire pour alimentation mouillée (56) peuvent être montés.

9. Module d'étable selon l'une quelconque des revendications 7 à 8, comprenant :
• au moins quatre montants (46-52) qui s'étendent verticalement vers le haut à partir des points de coin de la paroi supérieure et qui sont fabriqués à partir de béton préfabriqué et forment un ensemble monolithique avec le plancher (12) et les parois de goulotte de bouse (26-34), dans lequel les montants peuvent s'étendre jusqu'à un niveau plus élevé au-dessus du plancher que les parois latérales (40, 42) et la paroi arrière (44), dans lequel, dans les montants (46-52), on prévoit des fentes (58) s'étendant dans la direction verticale, dans lesquelles des plaques libres, des tubes ou des planches (60) peuvent être reçus de manière coulissante.

10. Module d'étable selon l'une quelconque des revendications 7 à 9, prévu avec :
• une barrière (54) qui est configurée pour fermer l'ouverture d'accès dans une position fermée et la dégager dans une position ouverte.

11. Module d'étable (100) selon l'une quelconque des revendications 1 à 6,
dans lequel le module d'étable (100) n'est pas prévu avec une paroi arrière (44) ni avec des parois latérales (40, 42).

12. Etable fournie avec au moins une rangée de modules d'étable (10, 100), selon l'une quelconque des revendications 1 à 11.

13. Etable selon la revendication 12, dans laquelle, dans la rangée, on agence les uns à côté des autres, en alternance :
• des modules d'étable selon la revendication 11 ; et
• des modules d'étable selon l'une quelconque des revendications 7 à 10.

14. Etable selon la revendication 12 ou 13, prévue avec :
• un certain nombre de parois libres prévues pour fermer au moins un côté particulier souhaité d'au moins l'un des modules d'étable (100) selon la revendication 11, dans laquelle chaque paroi libre est montée sur le plancher (12) du module d'étable (100) approprié ou sur les parois latérales (40, 42) ou les montants (50, 52) des modules d'étable (10) voisins selon l'une quelconque des revendications 7 à 10.

15. Etable selon l'une quelconque des revendications 12 à 14, prévue avec :
• un certain nombre de barrières libres (54) prévues pour fermer un côté souhaité d'au moins l'un des modules d'étable (100) selon la revendication 11, dans laquelle chaque barrière libre (54) est montée sur le plancher (12) du module d'étable (100) approprié ou sur une paroi latérale (40, 42) ou un montant (46, 48) d'un module d'étable (10) voisin selon l'une quelconque des revendications 7 à 10.

16. Etable selon l'une quelconque des revendications 12 à 15, prévue avec au moins deux rangées (R1, R2), avec chaque rangée (R1, R2) qui a une partie avant et une partie arrière, avec les bords avant (18) des planchers (12) des modules d'étable (10 ; 100) qui définissent la partie avant, et les bords arrière (20) des planchers (12) qui définissent la partie arrière de la rangée (R1, R2), dans laquelle le long de la partie avant d'une rangée, s'étend une passerelle (G).

17. Etable selon la revendication 16, dans laquelle les parties avant des deux rangées (R1, R2) voisines se font face, dans laquelle entre les deux parties avant mutuellement en vis-à-vis, s'étend la passerelle (G).

18. Etable selon la revendication 16 ou 17, dans laquelle les côtés arrière des deux rangées (R1, R3) voisines se font face et sont placés l'un contre l'autre sans espaces intermédiaires.
